(19) Europäisches Patentamt
European Patent Office
Office européen des brevets

(11) Veröffentlichungsnummer: **0 034 724**
**A2**

# (12) EUROPÄISCHE PATENTANMELDUNG

(21) Anmeldenummer: 81100671.7

(22) Anmeldetag: 30.01.81

(51) Int. Cl.[3]: C 09 B 33/22
C 09 B 45/24
//D06P3/32

(30) Priorität: 16.02.80 DE 3005940

(43) Veröffentlichungstag der Anmeldung: 02.09.81 Patentblatt 81/35

(84) Benannte Vertragsstaaten: CH DE FR GB IT LI

(71) Anmelder: BASF Aktiengesellschaft
Carl-Bosch-Strasse 38
D-6700 Ludwigshafen(DE)

(72) Erfinder: Hansen, Guenter, Dr.
Mundenheimer Strasse 168
D-6700 Ludwigshafen(DE)

(72) Erfinder: Kolbinger, Hans Joergen, Dr.
Westring 60
D-6718 Gruenstadt(DE)

(72) Erfinder: Zeidler, Georg
Mutterstadter Strasse 7
D-6701 Dannstadt-Schauernheim(DE)

## (54) Polyazofarbstoffe.

(57) Die Erfindung betrifft Verbindungen, die in Form der freien Säuren der allgemeinen Formel I

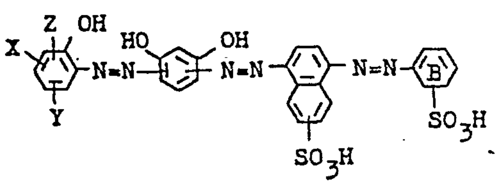

entsprechen, in der

X Nitro oder Hydroxysulfonyl,
Y Nitro oder Hydroxysulfonyl und
Z Wasserstoff oder zusammen mit Y einen gegebenenfalls durch Nitro substituierten Benzring bedeuten und wobei der Ring B noch durch Chlor, Brom, Nitro, Pyrrolidino, Piperidino, Morpholino, N-Methylpiperazino, Hexamethylenimino, Hydroxysulfonyl oder einen gegebenenfalls durch Hydroxysulfonyl substituierten Benzring substituiert sein kann, sowie die Eisen-, Mangan-, Kobalt-, Chrom-, Nickel- und Kupferkomplexe dieser Farbstoffe.

Die erfindungsgemäßen Verbindungen eignen sich insbesondere zum Färben von Leder.

EP 0 034 724 A2

COMPLETE DOCUMENT

## Polyazofarbstoffe

Die Erfindung betrifft Verbindungen, die in Form der freien Säuren der allgemeinen Formel I

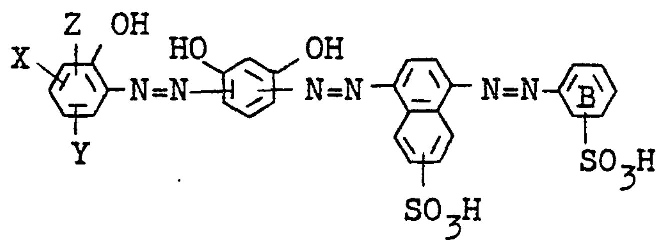

entsprechen, in der

X Nitro oder Hydroxysulfonyl,

Y Nitro oder Hydroxysulfonyl und

Z Wasserstoff oder zusammen mit Y einen gegebenenfalls durch Nitro substituierten Benzring bedeuten und wobei der Ring B noch durch Chlor, Brom, Nitro, Pyrrolidino, Piperidino, Morpholino, N-Methylpiperazino, Hexamethylenimino, Hydroxysulfonyl oder einen gegebenenfalls durch Hydroxysulfonyl substituierten Benzring substituiert sein kann, sowie die Eisen-, Mangan-, Kobalt-, Chrom-, Nickel- und Kupferkomplexe dieser Farbstoffe.

Zur Herstellung der Verbindungen der Formel I kann man eine Diazoverbindung von Aminen der Formel II

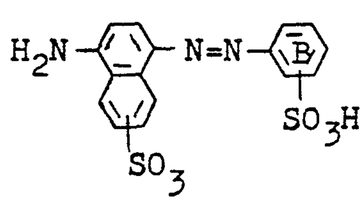

Bg/BL

mit Kupplungskomponenten der Formel III

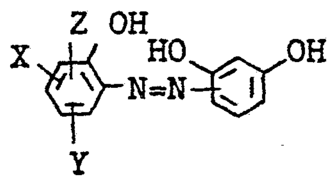,

die auch in metallisierter Form vorliegen können, umsetzen. Die Metallisierung kann gegebenenfalls natürlich auch anschließend an die Kupplung vorgenommen werden. Einzelheiten der Herstellung können den Beispielen entnommen werden, in denen sich Angaben über Teile und Prozente, sofern nicht anders vermerkt, auf das Gewicht beziehen.

Die erfindungsgemäßen Verbindungen eignen sich zum Färben von Polyamiden, Papier und insbesondere von Leder. Die Färbungen auf Leder zeichnen sich durch gute Licht- und Naßechtheiten aus, außerdem sind die Farbstärke und das Egalisiervermögen ausgeprägt.

Von besonderer Bedeutung sind Verbindungen der Formel I, bei denen
X = $NO_2$, Y = $NO_2$ und Z = H oder X = $NO_2$, Y = $SO_3H$ und Z = H oder X = $SO_3H$ und Y + Z einen durch Nitro substituierten Benzring bedeuten, in Form der Eisenkomplexe.

Der Ring B ist vorzugsweise weiter durch Hydroxysulfonyl oder Morpholino substituiert.

Beispiel 1

19,9 Teile 1-Amino-2-hydroxy-3,5-dinitro-benzol werden in der üblichen Weise diazotiert und in soda-alkalischer Lösung auf 11 Teile Resorcin gekuppelt. Die erhaltene Verbindung wird in 600 Teilen Wasser bei 80 °C suspendiert und bei pH 4 portionsweise mit 48,5 Teilen wasserfreiem Eisen-III-chlorid versetzt. Nach ungefähr 1 Std. bei 80 - 90 °C ist die Metallisierung vollständig. Der Farbstoff wird isoliert und in etwa 600 Teilen Wasser suspendiert. Zu dieser Suspension wird bei pH 9 die Diazoniumsalzlösung aus 48,7 Teilen 1-Amino-4-(2,5-disulfophenylazo)-naphthalin-6-sulfonsäure zugetropft. Nach Beendigung der Kupplung wird der Farbstoff bei einem pH-Wert von 1 - 2 bei 60 °C mit Kaliumchlorid ausgesalzen, heiß filtriert und getrocknet. Man erhält den Eisenkomplex der Verbindung der Formel

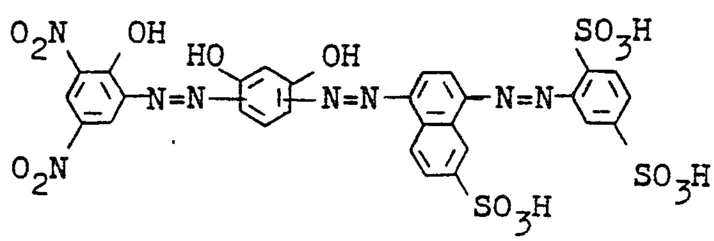 ,

der auf Leder licht- und naßechte dunkelbraune Färbungen ergibt. Die in der nachfolgenden Tabelle aufgeführten Farbstoffe lassen sich analog zu Beispiel 1 herstellen.

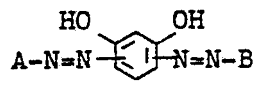

| Bsp. | 1. Diazokomponente $A-NH_2$ | 2. Diazokomponente $H_2N-B$ | Nuance auf Leder |
|---|---|---|---|
| 2 | 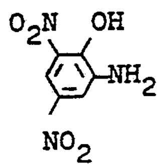 | 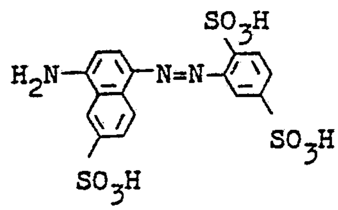 | braun |
| 3 | " | 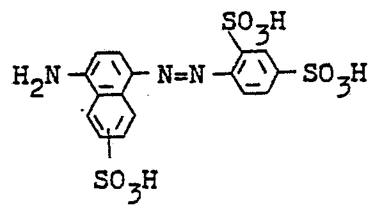 | " |
| 4 | 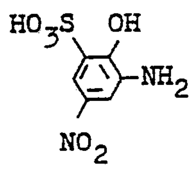 | 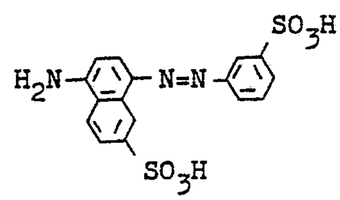 | " |
| 5 | 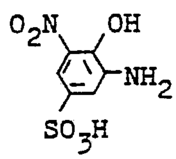 | 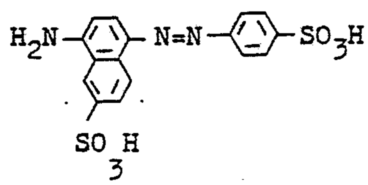 | " |
| 6 | 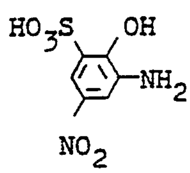 | 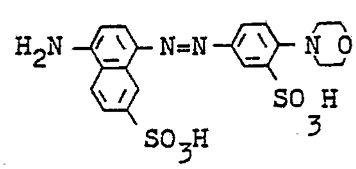 | " |

| Bsp. | 1. Diazokomponente $A-NH_2$ | 2. Diazokomponente $H_2N-B$ | Nuance auf Leder |
|---|---|---|---|
| 7 | 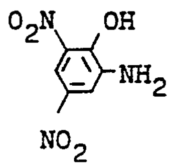 | 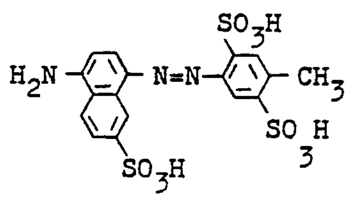 | braun |
| 8 | 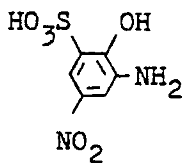 | 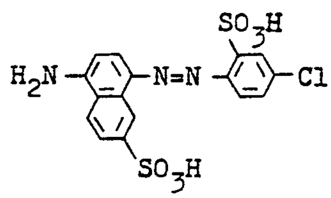 | " |
| 9 | 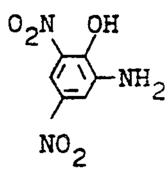 | 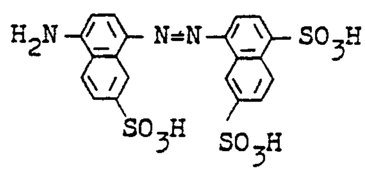 | " |
| 10 | 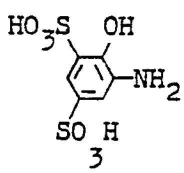 | 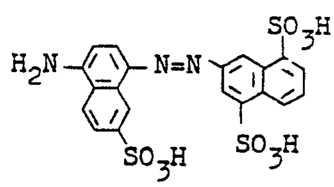 | " |

Beispiel 11

19,9 Teile 1-Amino-2-hydroxy-3,5-dinitro-benzol werden in der üblichen Weise diazotiert und in sodaalkalischer Lösung auf 11 Teile Resorcin gekuppelt. Anschließend fügt man zu der Suspension bei pH 6 - 7 eine Diazoniumsalzlösung aus 48,7 Teilen 1-Amino-4-(2,4-disulfophenyl-azo)-naphthalin-7-sulfonsäure hinzu. Nach beendeter Kupplung wird das Reaktionsgemisch mit Essigsäure auf pH 5 eingestellt, mit 24,5 Teilen Kupfersulfat (krist.) versetzt und bei pH 4 ungefähr 5 Stunden auf 90 - 95 °C erhitzt.

Nach erfolgter Metallisierung wird der Farbstoff durch Zugabe von Natriumchlorid abgeschieden, isoliert und getrocknet. Der Kupferkomplex der Verbindung der Formel

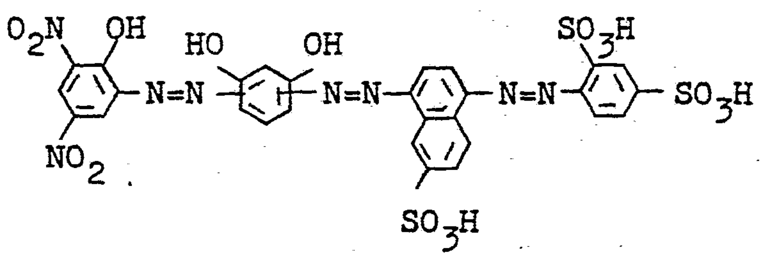

färbt Leder in licht- und naßechten rotbraunen Tönen.

Die in der folgenden Tabelle genannten Farbstoffe lassen sich entsprechend der obigen Vorschrift synthetisieren.

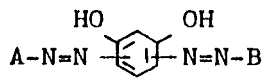

| Bsp. | 1. Diazokomponente A-$NH_2$ | 2. Diazokomponente $H_2N$-B | Nuance der Färbung auf Leder der metallfreien bzw. metallhaltigen Farbstoffe: metallfrei | Kupfer | Kobalt | Nickel | Chrom |
|---|---|---|---|---|---|---|---|
| 12 | 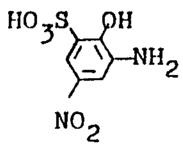 | 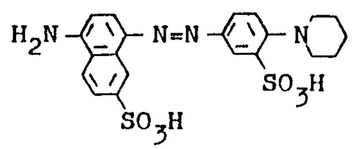 | - | rotbraun | - | rotbraun | - |
| 13 | " | 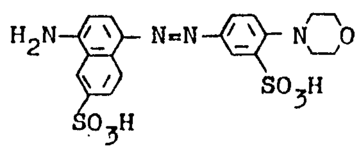 | braun | - | rotbraun | - | - |
| 14 | " | 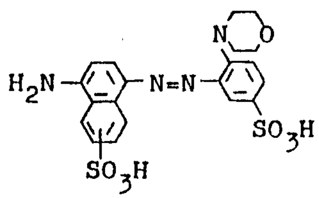 | " | - | - | - | - |

| Bsp. | 1. Diazokomponente $A-NH_2$ | 2. Diazokomponente $H_2N-B$ | Nuance der Färbung auf Leder der metallfreien bzw. metallhaltigen Farbstoffe metallfrei | Kupfer | Kobalt | Nickel | Chrom |
|---|---|---|---|---|---|---|---|
| 15 | 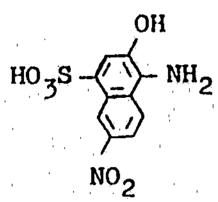 | 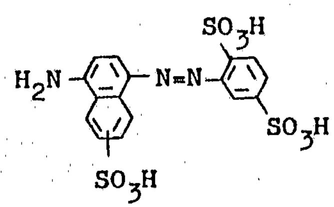 | braun | - | rotbraun | - | rotbraun |
| 16 | 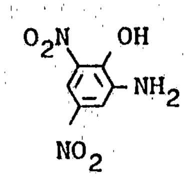 | 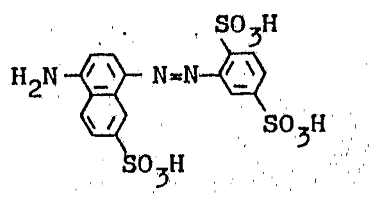 | - | rotbraun | " | rotbraun | " |
| 17 | 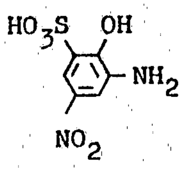 | 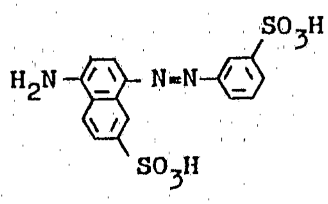 | braun | " | - | " | - |

| Bsp. | 1. Diazokomponente $A-NH_2$ | 2. Diazokomponente $H_2N-B$ | Nuance der Färbung auf Leder der metallfreien bzw. metallhaltigen Farbstoffe metallfrei | Kupfer | Kobalt | Nickel | Chrom |
|---|---|---|---|---|---|---|---|
| 18 | 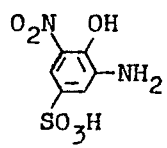 | 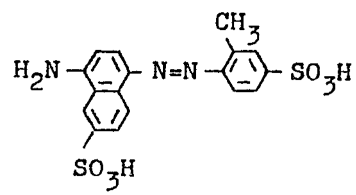 | - | rotbraun | rotbraun | - | rotbraun |
| 19 | " | 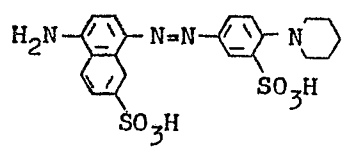 | braun | " | - |  | braun |
| 20 | " | 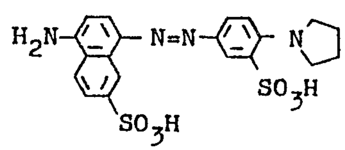 | " | " | - |  | " |

Patentansprüche

1. Verbindungen, die in Form der freien Säuren der allgemeinen Formel I

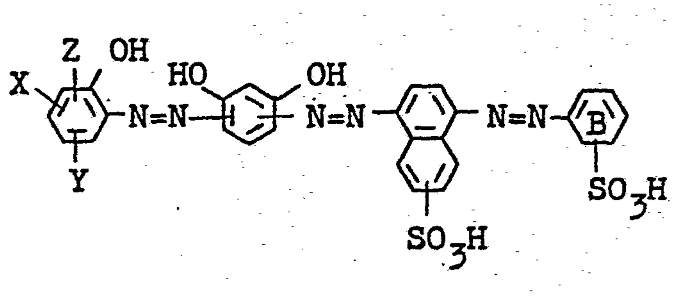

entsprechen, in der

X Nitro oder Hydroxysulfonyl,

Y Nitro oder Hydroxysulfonyl und

Z Wasserstoff oder zusammen mit Y einen gegebenenfalls durch Nitro substituierten Benzring bedeuten und wobei der Ring B noch durch Chlor, Brom, Nitro, Pyrrolidino, Piperidino, Morpholino, N-Methylpiperazino, Hexamethylenimino, Hydroxysulfonyl oder einen gegebenenfalls durch Hydroxysulfonyl substituierten Benzring substituiert sein kann, sowie die Eisen-, Mangan-, Kobalt-, Chrom-, Nickel- und Kupferkomplexe dieser Farbstoffe.

2. Verwendung der Verbindungen gemäß Anspruch 1 zum Färben von Leder.